# EUROPÄISCHE PATENTSCHRIFT

(11) **EP 3 154 743 B1**
(45) Veröffentlichungstag und Bekanntmachung des Hinweises auf die Patenterteilung: **09.01.2019**
(21) Anmeldenummer: 15718483.9
(22) Anmeldetag: 24.04.2015
(51) Int. Cl.: B23K 26/26

(54) **VORRICHTUNG ZUM VERBINDEN VON BANDENDEN VON STAHLBÄNDERN**
APPARATUS FOR JOINING ENDS OF OF METALLIC BANDS
DISPOSITIF POUR CONNECTER LES EXTRÉMITÉS DE BANDES MÉTALLIQUES

(30) Priorität: 13.06.2014 DE 102014008393; 18.03.2015 DE 102015204852
(43) Veröffentlichungstag der Anmeldung: 19.04.2017
(73) Patentinhaber: SMS group GmbH, 40237 Düsseldorf (DE)
(72) Erfinder: ARTEL, Jens, 57399 Kirchhundem (DE); ALIPAS, Sebastian, 40764 Langenfeld (DE); BENDLER, Manuel, 40545 Düsseldorf (DE); DORNSCHEIDT, Christian, 40629 Düsseldorf (DE); KÜMMEL, Lutz, 41363 Jüchen (DE); WINTER, Carsten, 32547 Bad Oeynhausen (DE)
(74) Vertreter: Klüppel, Walter
(86) Internationale Anmeldenummer: PCT/EP2015/058921
(87) Internationale Veröffentlichungsnummer: WO 2015/188969

(56) Entgegenhaltungen:
- EP-A1- 0 302 954
- WO-A1-2007/124872
- DE-C1- 4 100 302
- US-A- 4 854 493

## Beschreibung

Die vorliegende Erfindung betrifft eine Vorrichtung und ein Verfahren zum Verbinden von Bandenden von Stahlbändern.

### Stand der Technik

Für die Verarbeitung von Metallbändern ist es nützlich, wenn diese in einer möglichst langen Form vorliegen. Optimal ist das Vorhandensein eines so genannten Endlosbandes, da bei einem solchen die Verarbeitung kontinuierlich erfolgen kann. Nach der Verarbeitung des Endlosbandes auf einer kontinuierlichen Bearbeitungsstraße wird das Endlosband wieder zerschnitten. Ein Endlosband wird durch das Zusammenfügen beziehungsweise Verbinden von endlich langen Stahlbändern erzeugt. Bei dem Prozess des Verbindens der Bänder wird insbesondere auf zwei Faktoren, nämlich die Schnelligkeit des Verbindens und die Qualität des Verschweißens beziehungsweise des Verbindens besonderen Wert gelegt. Die Schnelligkeit des Verbindens ist die Zeitdauer, die benötigt wird, um die Bandenden zu verbinden. Sie ist ein produktionsbestimmender Faktor, welcher für die nachfolgenden Prozesse von großer Bedeutung ist. Ein mitbestimmender Faktor, welcher die möglichst kurze Zeitspanne zum Verbinden beschränkt, ist die Qualität des Verschweißens. Insbesondere sollen an der Schweißnaht keine unregelmäßigen oder unerwünschten Schwächungen der Belastbarkeit entstehen. Solche Mängel setzen die Qualität des Zwischenprodukts und damit auch die des Endprodukts herab und vermindern zudem die Qualität der Bearbeitung des Endlosbandes. Vor dem Verbinden der Bandenden durch ein Schweißgerät werden die zu verbindenden Enden üblicherweise mit mechanischen Scheren bearbeitet und für das Schweißen vorbereitet. Eine saubere Kantenbeschaffenheit ist eine Voraussetzung dafür, dass eine angemessene Verbindungsqualität durch das Schweißen erreicht wird.

Die EP 20 64 023 A1 (siehe auch die DE 39 02 451 A1) sieht eine Verbindungsvorrichtung vor. Die Bandenden werden in eine Schere eingebracht und dort durch mechanische Messer bearbeitet. Nach dem Schneidvorgang bewegt sich ein Schweißgerät in den Schneidbereich und verbindet die beiden vorbereiteten Enden der Stahlbänder.

### Darstellung der Erfindung

Ausgehend vom Stand der Technik ist es Aufgabe der vorliegenden Erfindung bei hoher Verbindungsqualität die Geschwindigkeit des Verbindens der einzelnen Stahlbandenden zu erhöhen.

Die gestellte Aufgabe wird durch eine Vorrichtung mit den Merkmalen des Anspruchs 1 gelöst. Vorteilhafte Ausgestaltungen sind in den Unteransprüchen angegeben.

Dementsprechend weist die Vorrichtung eine Schere, wobei die Schere einen Obermesserträger mit einem oder mehreren Obermessern und einen Untermesserträger mit einem oder mehreren Untermessern umfasst, ein Schweißgerät, mindestens einen Schweißtisch und Seitenteile zum horizontalen Bewegen der Bandenden auf. Erfindungsgemäß sind das Schweißgerät und die Schere in ihren Wirkebenen voneinander getrennt.

Wirkebenen sind im Wesentlichen die Ebenen in denen das jeweilige Gerät seinen Produktionsschritt durchführt. Die Wirkebene des Schweißgeräts ist dementsprechend durch die Ebene definiert, in der der Schweißvorgang durchgeführt wird und umfasst die eigentliche Schweißnaht, während die Wirkebene der Schere durch die Ebene definiert wird, in der der eigentliche Schnitt geführt wird.

Durch die Trennung der beiden Wirkebenen ergibt sich eine größere Unabhängigkeit zwischen dem Schneid- und dem Schweißvorgang. Eine Reduktion der Prozesszeit durch die funktionale Entkoppelung beider Prozessschritte ist die Folge. Der Verbindungsprozess der Stahlbänder kann schneller durchgeführt werden, wobei sich die Verbindungsqualität bei der gesteigerten Geschwindigkeit nicht mindert.

Erfindungsgemäß sind der Schweißtisch und der Untermesserträger absenkbar Durch die Absenkbarkeit des Schweißtisches und des Untermesserträgers kann sichergestellt werden, dass eine horizontale Bewegung der Bänder über das Untermesser und den mindestens einen Schweißtisch hinweg durch die Seitenteile realisierbar ist. Die Seitenteile bilden dementsprechend Auflagen, auf denen die Bänder angeordnet sind und über welche eine Bewegung, insbesondere eine Relativbewegung der beiden zu verbindenden Bandteile zueinander, aufgebracht werden kann. Eine Bewegung der Bänder findet beim Positionieren der Bänder unterhalb der Schere und dem an den Schneidvorgang anschließenden Transport der Bänder zum Schweißgerät statt. Durch die Absenkbarkeit des Untermesserträgers und des mindestens einen Schweißtisches kann eine kompakte Bauweise einer Vorrichtung zum Verbinden von Bandenden verwirklicht werden. Durch die kurzen Wege zwischen den Bearbeitungspositionen kann bei hoher Qualität des Verbindungsprozesses eine Steigerung der Geschwindigkeit erreicht werden.

Besonders vorteilhaft kann dabei vorgesehen sein, dass der mindestens eine Schweißtisch weiterhin jeweils über eine horizontal angeordnete Exzenterwelle vertikal ausrichtbar ist. Durch die Verwendung einer Exzenterwelle kann konstruktiv eine einfache vertikale Ausrichtung des mindestens einen Schweißtisches erreicht werden, wobei die Bewegung sehr präzise gesteuert und der gewünschten Position ein sicherer Halt gewährleistet werden kann.

Weiterhin ist es vorteilhaft, wenn der mindestens eine Schweißtisch in einer Schweißtischkassette angeordnet ist. Durch das Verwenden einer Schweißtischkassette wird eine sehr steife Konstruktion erreicht, da eine Eingliederung des mindestens einen Schweißtisches in Seitenteile, welche die Bänder positionieren, wegfällt. Weiterhin ist durch die Verwendung einer Schweißtischkassette eine Integration von Schweißsensorik, beispielsweise zur Überwachung der Schweißparameter, konstruktiv einfach zu ermöglichen. Auch eine Abstützung einer Glättrolle zum Vermeiden von Bandfehlern bei der Aufwickelung, wird durch die Verwendung einer Schweißtischkassette, welche den mindestens einen Schweißtisch enthält, erleichtert.

Bevorzugt sind zwei Schweißtische vorgesehen. Dadurch, dass zwei Schweißtische vorgesehen sind, können die gegenüberliegenden Bandenden in der Höhe zueinander ausgerichtet werden. Die exakte Ausrichtung der Bandenden ist ein mit entscheidender Faktor für einen problemlosen und mängelfreien Schweißvorgang.

Weiterhin ist es vorteilhaft, wenn das Schweißgerät, welches die beiden Bandenden verbindet, als ein Laserschweißgerät ausgebildet ist. Durch das Laserschweißen kann eine Verbindung der Bänder mit einer vergleichsweise schmalen Schweißnaht und einer hohen Schweißgeschwindigkeit erreicht werden.

Bevorzugt sind die Schweißtischkassette und / oder der Untermesserträger linear in der Vertikalachse verschiebbar. Dadurch ist das Absenken der Kassette und / oder des Trägers in einer schnellen und einfach steuerbaren Weise möglich.

Eine vorteilhafte Ausgestaltung liegt weiterhin vor, wenn das eine oder die mehreren Untermesser und / oder das eine oder die mehreren Obermesser in einer Messerkassette angeordnet sind beziehungsweise ist. Die Obermesserkassette ist die Messerkassette, welche die oder das Obermesser aufweist. Entsprechend sieht die Untermesserkassette die oder das Untermesser vor. Durch die Verwendung einer Messerkassette, in der die oder das Messer angeordnet ist bzw. sind, ist ein einfacher Austausch des Schneidwerkzeugs möglich. Ein Austausch der Messer ist durch den natürlichen Betriebsverschleiß von Zeit zu Zeit notwendig und kann so in einfacher Weise erfolgen.

Besonders bevorzugt ist die Untermesserkassette im Bereich des einen oder der mehreren Untermesser und der Untermesserträger offen ausgestaltet. Die durch den Schneidvorgang anfallenden abgeschnittenen Teile fallen durch die gebildete Öffnung und können einfach entsorgt werden. Auch für die Qualitätskontrolle notwendige Probeentnahmen können so deutlich erleichtert durchgeführt werden.

Weiterhin ist es vorteilhaft, wenn die Seitenteile Spannbalken aufweisen. Durch Spannbalken können die auf den Seitenteilen aufliegenden Bänder durch Festklemmen für den Schneidvorgang und auch für das nachfolgende Positionieren und Schweißen fixiert werden.

Besonders bevorzugt sind dabei Spannnasen an den Spannbalken angeordnet. Die Spannnasen sind Vorsprünge, welche als Verlängerungen der Spannbalken in Richtung der zu verbindenden Bandenden dienen. Die Spannnasen wirken beim Schneiden als Niederhalter und fixieren die Bandenden beim Schweißen auf den Schweißtischen. In direktem Kraftschluss halten die Spannnasen das Band auf der Untermesserkassette beziehungsweise auf dem oder den Schweißtischen.

Die oben gestellte Aufgabe wird weiterhin durch ein Verfahren mit den Merkmalen des Anspruchs 10 gelöst. Vorteilhafte Weiterbildungen sind in den Unteransprüchen angegeben.

Entsprechend umfasst das Verfahren das Transportieren der Bandenden durch Seitenteile zu einer Schere, aufweisend einen Untermesserträger mit einem oder mehreren Untermessern und einen Obermesserträger mit einem oder mehreren Obermessern, Schneiden der Bandenden durch die Schere, Transportieren der Bandenden durch Seitenteile auf mindestens einen Schweißtisch und Verbinden der Bandenden durch ein Schweißgerät. Erfindungsgemäß wirken das Schweißgerät und die Schere in getrennten Wirkebenen.

### Kurze Beschreibung der Figuren

Bevorzugte weitere Ausführungsformen und Aspekte der vorliegenden Erfindung werden durch die nachfolgende Beschreibung der Figuren näher erläutert. Dabei zeigen:
- Fig. 1: eine seitliche Schnittansicht der Vorrichtung 1 zum Verbinden von Bandenden von Stahlbändern;
- Fig. 2: eine perspektivische Schnittansicht der Vorrichtung 1 zum Verbinden von Bandenden von Stahlbändern;
- Fig. 3: eine seitliche Schnittansicht der Schere 4 und der Schweißvorrichtung 6;
- Fig. 4: eine schematische Seitenansicht der Schweißtischkassette 7;
- Fig. 5: eine Draufsicht auf die Untermesserkassette 50; und
- Fig. 6: eine seitliche Schnittansicht des Untermesserträgers 46 mit Untermesserkassette 50.

### Detaillierte Beschreibung bevorzugter Ausführungsbeispiele

Im Folgenden werden bevorzugte Ausführungsformen anhand der Figuren beschrieben. Dabei werden gleiche, ähnliche oder gleichwirkende Elemente in den unterschiedlichen Figuren mit identischen Bezugszeichen bezeichnet und auf eine wiederholte Beschreibung dieser Elemente wird teilweise verzichtet, um Redundanzen in der Beschreibung zu verhindern.

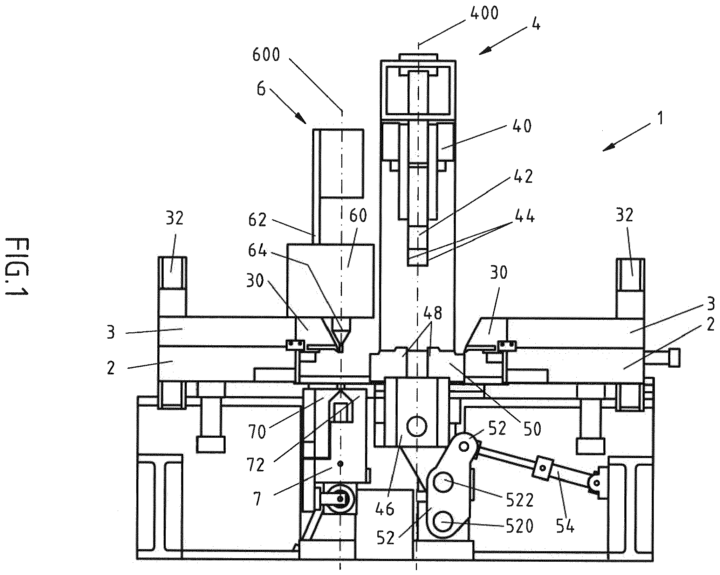

Figur 1 zeigt eine Vorrichtung 1 zum Verbinden von Bandenden, welche eine Schere 4 vorsieht. Über der horizontalen Ebene, in der die Bänder transportiert werden, ist ein Obermesserträger 40 mit einem Obermesser 44 angeordnet. Der Obermesserträger 40, der Obermesser 44 in einer Obermesserkassette 42 umfasst, ist über eine Hydraulik in seiner Vertikalachse bewegbar. In einer Vertikalachse unter dem Obermesserträger 40 ist ein Untermesserträger 46 mit einer Untermesserkassette 50 mit Untermessern 48 angeordnet. Die Obermesserkassette 42 kann über den Obermesserträger 40 abgesenkt werden und schließt in einer Schneidposition mit der Untermesserkassette 50.

Um die für den Schneidvorgang und Transportvorgang erforderliche Fixierung der Bänder sicherzustellen, sind Spannbalken 3 vorgesehen, die in Figur 1 in ihrer Klemmposition gezeigt sind. Jeweils ein Spannbalken 3 ist auf einem Seitenteil 2 angeordnet. Das Seitenteil 2 ist vorteilhafterweise so ausgebildet, dass die Fläche, die mit dem Band in Kontakt kommt, ähnliche Ausmaße hat, wie die Fläche, die durch das Seitenteil 2 vorgegeben wird, kann aber auch in verschiedener Form ausgebildet sein. Durch einen Aufsatz 32 auf dem Seitenteil 2 ist der Spannbalken 3 jeweils über dem Seitenteil 2 vorgesehen. Der Aufsatz 32 weist einen Bewegungsmechanismus auf, welcher den Spannbalken 3 in vertikaler Richtung bewegen kann. Durch Herabfahren der Spannbalken 3 können auf den Seitenteilen 2 befindliche Bänder eingeklemmt werden. Die Fixierung dient der exakten Positionierung der Bandenden über die gesamten Prozessschritte Schneiden, Fügen und Schweißen.

Die Spannbalken 3 weisen Spannnasen 30 auf, die in Richtung der zu verbindenden Bandenden über die Seitenteile 2 hinausstehen. Die Ausführungsform in Figur 1 zeigt am Spannbalken 3 befindliche Spannnasen 30, die einen im Wesentlichen trapezförmigen in Richtung des Bearbeitungsvorgangs zuspitzenden Querschnitt aufweisen. Die sich zuspitzende Form der Spannnasen 30 stellt dabei sicher, dass das Schweißgerät 60 für den Schweißvorgang nah an die zu verbindenden Bandenden heranfahren kann.

Über zwei Anschwenkzylinder 54 (nur einer gezeigt) für den Untermesserträger 46 kann der Untermesserträger 46 und damit auch die Untermesserkassette 50 mit Untermessern 48 abgesenkt werden. Die Absenkfunktion ist für das Positionieren der Bänder nach dem Schneidvorgang vorgesehen. Die Bänder müssen nach dem Schneidvorgang unter dem Schweißgerät 60 positioniert werden. Für die notwendige Positionierung der Bandenden nach dem Schneidvorgang sind die zwei Seitenteile 2 vorgesehen. Die horizontal beweglichen Seitenteile 2 mit den fixierenden Spannbalken 3 bewegen dafür die Bandenden bei einem abgesenkten Untermesserträger 46 über diesen hinweg.

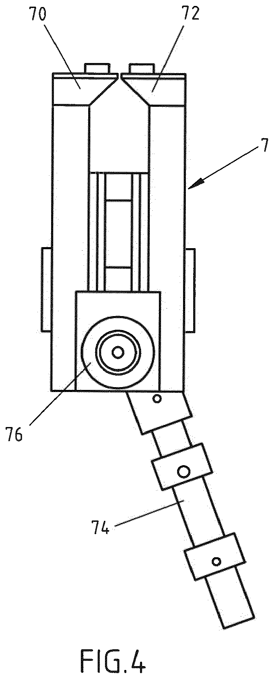

Neben der Schere 4 ist eine Schweißvorrichtung 6 vorgesehen, die beispielsweise als Laserschweißgerät ausgebildet ist. Über ein Fahrwerk 62 kann das Schweißgerät 60 mit einem Schweißkopf 64 in vertikaler Ebene bewegt werden, um den Schweißkopf 64 in unmittelbare Nähe zu den zu verbindenden Bandenden zu bringen. Die Schweißvorrichtung 60 ist zudem auch horizontal für den Schweißvorgang bewegbar. Drei oder mehr Achsen können für die Beweglichkeit der Schweißvorrichtung 6 vorgesehen sein. Unter dem Schweißgerät 60 und unter der Transportebene der Bänder ist eine Schweißtischkassette 7 vorgesehen, welche zwei Schweißtische 70, 72 aufweist. Auch die Schweißtischkassette 7 ist über einen oder mehrere Anschwenkzylinder 74 absenkbar, wie sich insbesondere aus Figur 4 ergibt, um die Positionierung der geschnittenen Bandenden unter der Schweißvorrichtung durch die Seitenteile 2 zu ermöglichen.

In Figur 1 ist der Abschwenkzylinder 54 in seiner ausgefahrenen Stellung gezeigt. Die Oberseite der Untermesserkassette 50 befindet sich auf Höhe der Bandenden. Durch den ausgefahrenen Anschwenkzylinder 54 ist über das Gelenkteil 52 der Untermesserträger 46 in seiner oberen Position angeordnet. Die Untermesserkassette 50 mit den Untermessern 48 befindet sich in Schneideposition. Auf den Seitenteilen 2 durch die Spannbalken 3 fixierte Bänder (nicht gezeigt) können - das Hinauffahren des Schweißgeräts 60 vorausgesetzt - durch Heranfahren der Seitenteile 2 an die Untermesserkassette 46 auf jener positioniert werden. Durch das Herabfahren des Obermesserträgers 40 mit der Obermesserkassette 44 in die Untermesserkassette 50 nach dem Positionieren der Bandenden kann der Schnittvorgang durchgeführt werden.

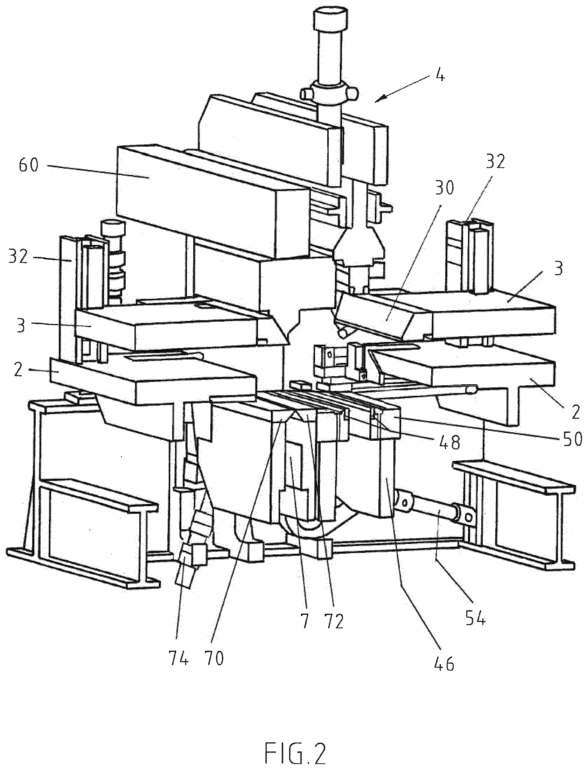

Figur 2 zeigt eine perspektivische Schnittansicht. Die Spannbalken 3 sind in ihrer hochgefahrenen Stellung gezeigt. Bänder können für die Verarbeitung an der Vorrichtung 1 eingebracht oder ein schon verbundenes Band entfernt werden. Jeweils auf den Seitenteilen 2 sind die vertikalen Aufsätze 32 angeordnet, die einen Bewegungsmechanismus vorsehen, so dass der daran angebrachte Spannbalken 3 mit den Spannnasen 30 vertikal bewegbar ist. Die Seitenteile 2 und somit auch die darauf befindlichen Spannbalken 3 mit Spannnasen 30 sind nur in horizontaler Richtung bewegbar. Da die Seitenteile 2 nur horizontal bewegt werden können, sind die Schweißtische 70, 72 in der Schweißtischkassette 7 und der Untermesserträger 46 durch Anschwenkzylinder absenkbar. Zwei Anschwenkzylinder 54 (nur einer gezeigt) sind über das Gelenkteil 52 jeweils mit einer Seite des Untermesserträgers 46 verbunden. Das Gelenkteil 52 weist drei Lager auf. Das eine Lager 520 ist an dem Vorrichtungsgerüst als fixer Drehpunkt, das zweite und das dritte Lager 522, 524 sind als bewegliche Drehpunkte ausgebildet. So kann eine vertikale Absenkung des Untermesserträgers 46 erreicht werden. Die Absenkung der Schweißtischkassette 7 erfolgt über den Anschwenkzylinder 74. Im Unterschied zu Figur 1 zeigt Figur 2 den Untermesserträger 46 in seiner abgesenkten Position.

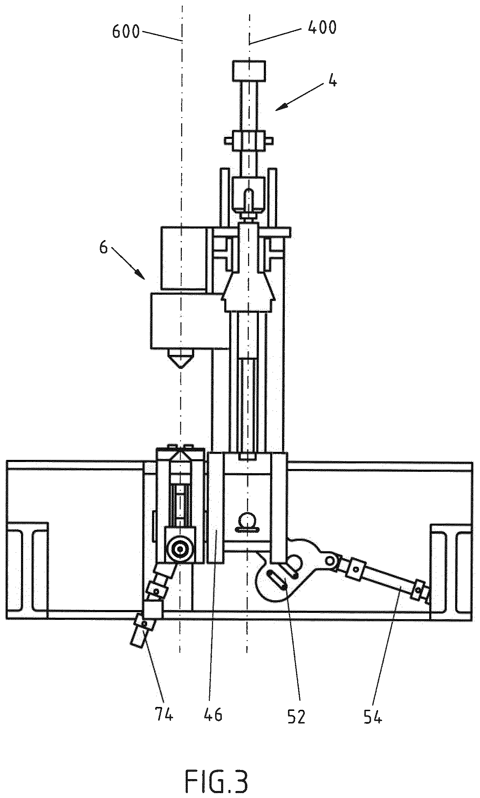

Figur 3 verdeutlicht die beiden funktionell stark entkoppelten Prozessschritte durch Darstellung der Arbeitsebenen Schweißebene 600 und Schneidebene 400. Die funktionelle Trennung der beiden Schritte Schneiden und Schweißen begründet insbesondere zwei Vorteile. Zunächst erhalten die Konstruktionen sowohl der Schere 4 als auch der Schweißtischkassette 7 eine deutlich größere Flexibilität. So können Anpassungen insbesondere an verschiedene Materialien der Bänder und unterschiedliche Banddicken konstruktiv einfach durchgeführt werden. Ein weiterer Vorteil liegt in der Reduktion der Prozesszeit durch die stärkere Entkopplung der beiden Arbeitsprozesse.

Figur 4 zeigt eine Schweißtischkassette 7 mit Anschwenkzylinder 74 im Detail. Zwei Schweißtische 70, 72 sind vorgesehen, wobei der eine Schweißtisch 70 über eine Exzenterwelle 76 auf der Bedienseite und der zweite Schweißtisch 72 über eine Exzenterwelle auf der Antriebsseite (nicht gezeigt) zum Ausrichten der Bandenden eingestellt werden können. Über den Anschwenkzylinder 74 kann die Schweißtischkassette 7 nach unten bewegt werden, um den horizontalen Bewegungsablauf der Seitenteile 2 zu ermöglichen. Durch die Einstellung der Schweißtische 70, 72 durch die Exzenterwellen können die beiden Bandenden für den Schweißvorgang in vertikaler Ebene ausgerichtet werden.

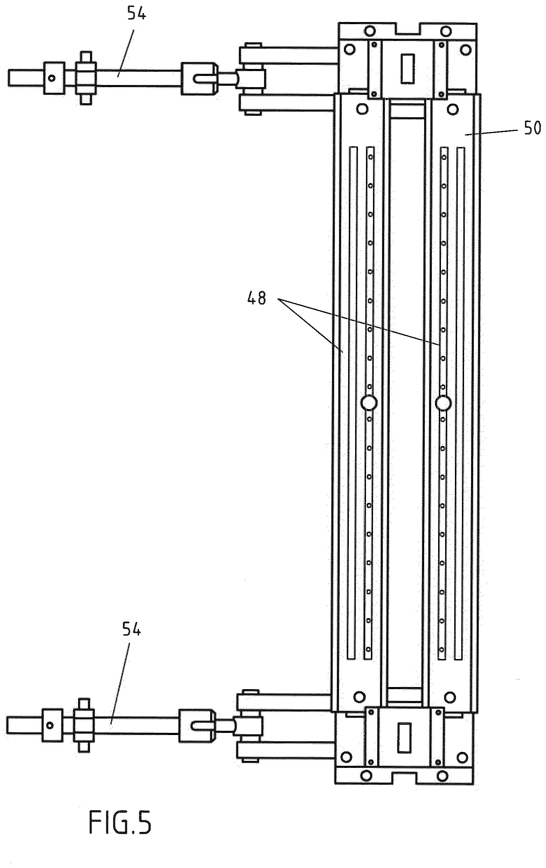

Figur 5 zeigt in der Draufsicht eine an den Stirnseiten geschlossene Untermesserkassette 50 mit zwei Untermessern 48. Die zwei Untermesser 48 an den Längsseiten bilden mit zwei seitlichen Begrenzungen eine Öffnung rechteckigen Querschnitts aus. Diese Öffnung ist komplementär den Maßen der Obermesserkassette 42 mit den Obermessern 44. So erfolgt beim Herabbewegen des Obermesserträgers 40 in der Öffnung der Schneidvorgang. Die Untermesserkassette 50 ist offen gestaltet. Durch den Schneidvorgang herabfallende abgeschnittene Teile fallen durch die Öffnung der Untermesserkassette 50 und durch den offen gestalteten Untermesserträger 46 (nicht gezeigt) in einen nicht gezeigten Behälter oder eine Entsorgungsvorrichtung. Durch den Schneidvorgang herabfallender Schrott kann somit einfach entsorgt werden. Auch bietet die derart gestaltete Öffnung die Möglichkeit einfach Probenentnahmen durchzuführen. Die Untermesserkassette 50 ist auf dem Untermesserträger (nicht gezeigt) angeordnet. Die kurzen Seiten des Untermesserträgers 46 sind jeweils über ein Gelenkteil 52 mit einem hydraulischen Anschwenkzylinder 54 verbunden.

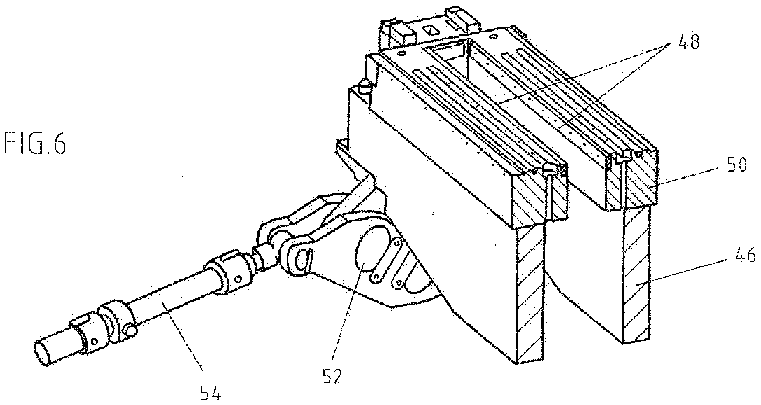

Figur 6 zeigt eine perspektivische Schnittansicht des Untermesserträgers 46. Auf dem Untermesserträger 46 ist die Untermesser 48 aufweisende Untermesserkassette 50 angeordnet. Sowohl die Untermesserkassette 50 als auch der Untermesserträger 46 sind offen ausgebildet, so dass durch den Schneidvorgang herabfallende Teile durch die gebildete Öffnung fallen und entsorgt werden können.

### Bezugszeichenliste

- 1: Vorrichtung zum Verbinden von Bandenden von Stahlbändern
- 2: Seitenteil
- 3: Spannbalken
- 30: Spannnase
- 32: Aufsatz
- 4: Schere
- 40: Obermesserträger
- 400: Schneidebene
- 42: Obermesserkassette
- 44: Obermesser
- 46: Untermesserträger
- 48: Untermesser
- 50: Untermesserkassette
- 52: Gelenkteil
- 520: erstes Lager / fixer Drehpunkt
- 522: zweites Lager / beweglicher Drehpunkt
- 524: drittes Lager / beweglicher Drehpunkt
- 54: Anschwenkzylinder des Untermesserträgers
- 6: Schweißvorrichtung
- 60: Schweißgerät
- 600: Schweißebene
- 62: Fahrwerk
- 64: Schweißkopf
- 7: Schweißtischkassette
- 70: Schweißtisch
- 72: Schweißtisch
- 74: Anschwenkzylinder der Schweißtischkassette
- 76: Exzenterwelle

## Patentansprüche

1. Vorrichtung (1) zum Verbinden von Bandenden von Stahlbändern, aufweisend eine Schere (4), wobei die Schere (4) einen Obermesserträger (40) mit einem oder mehreren Obermessern (44) und einen Untermesserträger (46) mit einem oder mehrere Untermessern (48) umfasst, ein Schweißgerät (60), mindestens einen Schweißtisch (70, 72) und Seitenteile (2), wobei das Schweißgerät (60) und die Schere in ihrer Wirkebene voneinander getrennt sind, wobei die Seitenteile (2) Spannbalken (3) aufweisen, wobei die Seitenteile (2) Auflagen bilden, auf denen zu verbindenden Bänder anordenbar sind und die Spannbalken (3) zum Festklemmen der auf den Seitenteilen (2) anordenbaren Bänder für den Schneidvorgang und das nachfolgende Positionieren und Schweißen ausgeführt sind und die Seitenteile (2) zum horizontalen Bewegen der Bandenden zum Positionieren der Bänder unterhalb der Schere (4) und zum Transportieren der Bänder zum Schweißgerät (60) vorgesehen sind und **dadurch gekennzeichnet, dass** der mindestens eine Schweißtisch (70, 72) und der Untermesserträger (46) absenkbar sind.

2. Vorrichtung (1) gemäß Anspruch 1 oder 2, **dadurch gekennzeichnet, dass** der mindestens eine Schweißtisch (70, 72) jeweils über eine Exzenterwelle (76) ausrichtbar ist.

3. Vorrichtung (1) gemäß einem der vorherigen Ansprüche, **dadurch gekennzeichnet, dass** der mindestens eine Schweißtisch (70, 72) in einer Schweißtischkassette (7) angeordnet ist.

4. Vorrichtung (1) gemäß einem der vorherigen Ansprüche, **dadurch gekennzeichnet, dass** zwei Schweißtische (70, 72) vorgesehen sind.

5. Vorrichtung (1) gemäß einem der vorherigen Ansprüche, **dadurch gekennzeichnet, dass** die Schweißtischkassette (7) und / oder der Untermesserträger (46) linear in der Vertikalachse verschiebbar sind bzw. ist.

6. Vorrichtung (1) gemäß einem der vorherigen Ansprüche, **dadurch gekennzeichnet, dass** das eine oder die mehreren Obermesser (44) in einer Obermesserkassette (42) angeordnet ist bzw. sind.

7. Vorrichtung (1) gemäß einem der vorherigen Ansprüche, **dadurch gekennzeichnet, dass** das eine oder die mehreren Untermesser (48) in einer Untermesserkassette (50) angeordnet ist bzw. sind.

8. Vorrichtung (1) gemäß Anspruch 8, **dadurch gekennzeichnet, dass** im Bereich des einen oder der mehreren Untermesser (48) die Untermesserkassette (50) und der Untermesserträger (46) offen ausgestaltet sind.

9. Vorrichtung (1) gemäß Anspruch 10, **dadurch gekennzeichnet, dass** die Spannbalken (3) Spannnasen (30) aufweisen.

10. Verfahren zum Verbinden von Bandenden von Stahlbändern umfassend die Schritte: Transportieren der Bandenden durch Seitenteile (2) zu einer Schere (4), aufweisend einen Untermesserträger (46) mit einem oder mehreren Untermessern (48) und einen Obermesserträger (40) mit einem oder mehreren Obermessern (44), Schneiden der Bandenden durch die Schere (4), Transportieren der Bandenden durch Seitenteile (2) auf mindestens einen Schweißtisch (70, 72), Verbinden der Bandenden durch ein Schweißgerät (60), wobei das Schweißgerät (60) und die Schere (4) in getrennten Wirkebenen wirken, wobei die Seitenteile (2) Spannbalken (3) aufweisen, wobei die Seitenteile (2) Auflagen bilden, auf denen zu verbindenden Bänder anordenbar sind und die Spannbalken (3) zum Festklemmen der auf den Seitenteilen (2) anordenbaren Bänder für den Schneidvorgang und das nachfolgende Positionieren und Schweißen ausgeführt sind und die Seitenteile (2) zum horizontalen Bewegen der Bandenden zum Positionieren der Bänder unterhalb der Schere (4) und zum Transportieren der Bänder zum Schweißgerät (60) vorgesehen sind, **dadurch gekennzeichnet, dass** beim Transportieren der Bandenden durch die Seitenteile (2) der mindestens eine Schweißtisch (70, 72) und/oder der Untermesserträger (46) abgesenkt werden.

11. Verfahren gemäß Anspruch 12 oder 13, **dadurch gekennzeichnet, dass** der mindestens eine Schweißtisch (70, 72) in einer Schweißtischkassette (7) angeordnet ist.

12. Verfahren gemäß einem der Ansprüche 12 bis 14, **dadurch gekennzeichnet, dass** bei dem Transportieren der Bandenden die Schweißtischkassette (7) und / oder der Untermesserträger (46) linear verschoben wird bzw. werden.

## Claims

1. Device (1) for connecting strip ends of steel strips, comprising shears (4), wherein the shears (4) comprise an upper knife carrier (40) with one or more upper knives (44) and a lower knife carrier (46) with one or more lower knives (48), welding apparatus (60), at least one welding table (70, 72), and lateral members (2), wherein the welding apparatus (60) and the shears (4) are separated from one another in the planes of action thereof,
wherein
the lateral members (2) comprise clamping bars (3), wherein the lateral members (2) form supports on which strips to be connected can be arranged and the clamping bars (3) are constructed for fixedly clamping the strips, which can be arranged on the lateral members (2), for the cutting process and the subsequent positioning and welding and the lateral members (2) are provided for horizontal movement of the strip ends for positioning the strips below the shears (4) and for transporting the strips to the welding apparatus (60) and **characterised in that** the at least one welding table (70, 72) and the lower knife carrier (46) are lowerable.

2. Device (1) according to claim 1, **characterised in that** the at least one welding table (70, 72) is alignable by way of a respective eccentric shaft (76).

3. Device (1) according to one of the preceding claims, **characterised in that** the at least one welding table (70, 72) is arranged in a welding table cassette (7).

4. Device (1) according to any one of the preceding claims, **characterised in that** two welding tables (70, 72) are provided.

5. Device (1) according to any one of the preceding claims, **characterised in that** the welding table cassette (7) and/or the lower knife carrier (46) is or are linearly displaceable in the vertical axis.

6. Device (1) according to any one of the preceding claims, **characterised in that** the upper knife (44) or several upper knives (44) is or are arranged in an upper knife cassette (42).

7. Device (1) according to any one of the preceding claims, **characterised in that** the lower knife (48) or several lower knives (48) is or are arranged in a lower knife cassette (50).

8. Device (1) according to claim 7, **characterised in that** the lower knife cassette (50) and the lower knife carrier (46) are formed to be open in the region of the one or more lower knives (48).

9. Device (1) according to claim 1, **characterised in that** the clamping bars (3) comprise clamping noses (30).

10. Method of connecting strip ends of steel strips comprising the steps of: transporting the strip ends by lateral members (2) to shears (4), which comprise a lower knife carrier (46) with one or more lower knives (48) and an upper knife carrier (40) with one or more upper knives (44), cutting the strip ends by the shears (4), transporting the strip ends by lateral members (3) on at least one welding table (70, 72) and connecting the strip ends by welding apparatus (60), wherein the welding apparatus (60) and the shears (4) act in separated planes of action,
wherein
the lateral members (2) comprise clamping bars (3), wherein the lateral members (2) form supports on which strips to be connected can be arranged and the clamping bars (3) are constructed for fixedly clamping the strips, which can be arranged on the lateral members (2), for the cutting process and the subsequent positioning and welding and the lateral members (2) are provided for horizontal movement of the strip ends for positioning the strips below the shears (4) and for transporting the strips to the welding apparatus (60), **characterised in that** the at least one welding table (70, 72) and/or the lower knife carrier (46) is or are lowered during transport of the strip ends by the lateral members (2).

11. Method according to claim 10, **characterised in that** the at least one welding table (70, 72) is arranged in a welding table cassette (7).

12. Method according to one of claims 10 and 11, **characterised in that** the welding table cassette (7) and/or the lower knife carrier (46) is or are linearly displaced during transport of the strip ends.

## Revendications

1. Dispositif (1) destiné à relier des extrémités de bandes en acier, présentant une cisaille (4) ; dans lequel la cisaille (4) comprend un support de lames supérieures (40) comprenant une ou plusieurs lames supérieures (44) et un support de lames inférieures (46) comprenant une ou plusieurs lames inférieures (48) ; un appareil de soudage (60) ; au moins une table de soudage (70, 72) ; et des éléments latéraux (2) ; dans lequel l'appareil de soudage (60) et la cisaille sont séparés l'un de l'autre dans leur plan de travail ; dans lequel les éléments latéraux (2) présentent des barres de serrage (3) ; dans lequel les éléments latéraux (2) forment des appuis sur lesquels se peuvent venir se disposer des bandes qui doivent être reliées, et les barres de serrage (3) sont réalisées à des fins de serrage des bandes qui peuvent venir se disposer sur les éléments latéraux (2) pour le processus de cisaillement et pour le positionnement et le soudage ultérieurs, et les éléments latéraux (2) sont prévus à des fins de déplacement horizontal des extrémités de bandes à des fins de positionnement des bandes en dessous de la cisaille (4) et à des fins de transport des bandes en direction de l'appareil de soudage (60) ; **caractérisé en ce que** ladite au moins une table de soudage (70, 72) et le support de lames inférieures (46) peuvent s'abaisser.

2. Dispositif (1) selon la revendication 1, **caractérisé en ce que** ladite au moins une table de soudage (70, 72) peut s'orienter respectivement via un arbre d'excentrique.

3. Dispositif (1) selon l'une quelconque des revendications précédentes, **caractérisé en ce que** ladite au moins une table de soudage (70, 72) est disposée dans une cassette de tables de soudage (7).

4. Dispositif (1) selon l'une quelconque des revendications précédentes, **caractérisé en ce que** deux tables de soudage (70, 72) sont prévues.

5. Dispositif (1) selon l'une quelconque des revendications précédentes, **caractérisé en ce que** la cassette de tables de soudage (7) et/ou le support de lames inférieures (46) peuvent, respectivement peut se déplacer de manière linéaire dans l'axe vertical.

6. Dispositif (1) selon l'une quelconque des revendications précédentes, **caractérisé en ce que** lesdites une ou plusieurs lames supérieures (44) est, respectivement sont disposées dans une cassette de lames supérieures (42).

7. Dispositif (1) selon l'une quelconque des revendications précédentes, **caractérisé en ce que** lesdites une ou plusieurs lames inférieures (48) est, respectivement sont disposées dans une cassette de lames inférieures (50).

8. Dispositif (1) selon la revendication 8, **caractérisé en ce que**, dans la zone de lesdites une ou plusieurs lames inférieures (48), la cassette de lames inférieures (50) et le support de lames inférieures (46) sont agencées en position ouverte.

9. Dispositif (1) selon la revendication 10, **caractérisé en ce que** les barres de serrage (3) présentent des nez de serrage (30).

10. Procédé destiné à relier des extrémités de bandes en acier comprenant les étapes consistant à : transporter les extrémités de bandes via des éléments latéraux (2) en direction d'une cisaille (4) présentant un support de lames inférieures (46) comprenant une ou plusieurs lames inférieures (48) et un support de lames supérieures (40) comprenant une ou plusieurs lames supérieures (44) ; découper les extrémités de bandes via la cisaille (4) ; transporter les extrémités de bandes via des éléments latéraux (2) sur au moins une table de soudage (70, 72) ; relier les extrémités de bandes via un appareil de soudage (60) ; dans lequel l'appareil de soudage (60) et la cisaille (4) travaillent dans des plans de travail séparés ; dans lequel les éléments latéraux (2) présentent des barres de serrage (3) ; dans lequel les éléments latéraux (2) forment dés appuis sur lesquels peuvent venir se disposer des bandes qui doivent être reliées ; et les barres de serrage (3) sont réalisées à des fins de serrage des bandes qui peuvent venir se disposer sur les éléments latéraux (2) pour le processus de cisaillement et pour le positionnement et le soudage ultérieurs, et les éléments latéraux (2) sont prévus pour le déplacement horizontal des extrémités de bandes à des fins de positionnement des bandes en dessous de la cisaille (4) et à des fins de transport des bandes en direction de l'appareil de soudage (60) ; **caractérisé en ce que**, lors du transport des extrémités de bandes via les éléments latéraux (2) ladite au moins une table de soudage (70, 72) et/ou le support de lames inférieures (46) s'abaissent.

11. Procédé selon la revendication 12 ou 13, **caractérisé en ce que** ladite au moins une table de soudage (70, 72) est disposée dans une cassette de tables de soudage (7).

12. Procédé selon l'une quelconque des revendications 12 à 14, **caractérisé en ce que**, au cours du transport des extrémités de bandes, la cassette de tables de soudage (7) et/ou le support de lames inférieures (46) est, respectivement sont soumis à un déplacement en direction linéaire.
